# EUROPEAN PATENT APPLICATION

(11) **EP 3 557 690 A1**
(43) Date of publication of application: **23.10.2019**
(21) Application number: 18190366.7
(22) Date of filing: 23.08.2018
(51) Int. Cl.: H01M 12/06

(54) **A SMALL METAL AIR CELL**

(30) Priority: 18.04.2018 CN 201810345798
(71) Applicant: Beijing Yiyuan New Energy Technology Co., Ltd., ShiJingShan District Beijing 100041 (CN)
(72) Inventor: ZHANG, Shuxiong, Beijing, Beijing 100041 (CN); HONG, Lei, Beijing, Beijing 100041 (CN); ZHANG, Yunfan, Beijing, Beijing 100041 (CN)
(74) Representative: Monzón de la Flor, Luis Miguel

(57) **Abstract**

A small metal air cell can be easy to carry, easy to use, and can be well integrated with some existing standard battery products. It includes an electric core, wires, an upper cover, an output negative electrode, a negative electrode presser, a positive pole press, an output positive pole, a housing. The cores grouped are placed in a housing, and the bottom of a housing has a ventilation hole. Each core includes an air electrode, an absorbent cotton, an alloy rod, and an absorbent cotton is encapsulated outside an alloy rod by an air electrode. Each electric core is connected through a wire, and a total positive leading out line and a total negative leading out line are reserved. An output positive pole and an output negative pole are installed on an upper cover. A positive lead end connecting with an output positive pole and a negative lead end connecting with an output negative pole are respectively reached in a housing through reserved holes of an upper cover, and respectively connected to a total positive leading out line and a total negative leading out line. A negative electrode presser pressed and fixed an output negative pole, and a positive electrode presser pressed and fixed an output positive pole. A negative electrode presser, a positive electrode presser, an upper cover and a housing are welded into a whole.

## Description

### Field of the invention

The present invention relates to the technical field of new energy battery, and particularly relates to a small metal air cell.

### Background of the invention

The metal air cell (ie, fuel metal air battery) is a chemical power that produces electrical power by chemical reaction under the catalysis of catalyst, taking the oxygen in the air as the positive active substance, taking the metal as the negative active substance, and using the conductive solution (for example, water) as the electrolyte.

Metal air fuel cell has many unique advantages. Its fuel is metal materials, such as aluminum, magnesium, zinc, lithium and sodium. Because of the abundant reserves of fuel such as aluminum, magnesium and zinc, the metal air fuel cell resources can be fully supplied. The positive active substance is the oxygen in the air, and the cell itself does not need to carry. The size of energy carried by the cell is determined by the amount of metal as negative pole, which makes the actual rate energy of this cell can reach more than 350Wh/kg (the current lithium ion battery for 100Wh/kg), with great performance advantages. The products after reaction can be reelectrolyzed aluminum oxide (or magnesium hydroxide) into metal by using wind energy, solar energy, water energy and other clean energy or electric energy in the rich area, then reinstalled into metal air fuel cell to discharge, driving the electric vehicle. This can be achieved on the large scale production, can reduce pollution, reduce emissions, and can realize the centralized power supply, decentralized, low cost power will be transferred to the place in the high cost of local power, and power will be transferred from easy access to difficult to obtain. A new car life of zero pollution and zero emissions can be truly achieved. In the process, the free pollution is achieved, and green energy of zero emission is recycled. Metal air batteries are becoming more and more important in the world.

The current metal air cell is generally a large battery pack, assembled by a number of units, each of which has a cavity consisting of an air electrode and a metal plate (such as a magnesium plate, an alloy plate, etc.). The electrolyte (for example, water) is injected into the upper part of the cavity and reaction residue is discharged from the lower part of the cavity.

However, the volume of this metal air cell is huge and can not be applied in many fields. So it is urgent to develop a small metal air cell, which is easy to carry, easy to use, and can be well integrated with some existing standard battery products. Under the premise of industrial upgrading and environmental protection requirements increasing year by year, it makes the new products achieve automatic batch production process.

### Summary of the invention

For the above technical problem, the present invention provides a small metal air cell, which can be easy to carry, easy to use, and can be well integrated with some existing standard battery products.

The technical solution of the present invention is, the small metal air cell includes an electric core (1), wires (2), an upper cover (3), an output negative electrode (4), a negative electrode presser (5), a positive pole press (6), an output positive pole (7), a housing (8).

The cores grouped are placed in a housing, and the bottom of a housing has a ventilation hole (a). Each core includes an air electrode (b), an absorbent cotton (c), an alloy rod (d), and an absorbent cotton is encapsulated outside an alloy rod by an air electrode. Each electric core is connected through a wire (the connection may be in series, parallel, or series parallel mixing), and a total positive leading out line and a total negative leading out line are reserved. An output positive pole and an output negative pole are installed on an upper cover. A positive lead end (i) connecting with an output positive pole and a negative lead end (j) connecting with an output negative pole are respectively reached in a housing through reserved holes of an upper cover, and respectively connected to a total positive leading out line and a total negative leading out line. A negative electrode presser pressed and fixed an output negative pole, and a positive electrode presser pressed and fixed an output positive pole. A negative electrode presser, a positive electrode presser, an upper cover and a housing are welded into a whole.

There are the following reasons. The cores grouped are placed in a housing, and the bottom of a housing has a ventilation hole. Each core includes an air electrode, an absorbent cotton, an alloy rod, and an absorbent cotton is encapsulated outside an alloy rod by an air electrode. Each electric core is connected through a wire (the connection may be in series, parallel, or series parallel mixing), and a total positive leading out line and a total negative leading out line are reserved. An output positive pole and an output negative pole are installed on an upper cover. A positive lead end connecting with an output positive pole and a negative lead end connecting with an output negative pole are respectively reached in a housing through reserved holes of an upper cover, and respectively connected to a total positive leading out line and a total negative leading out line. A negative electrode presser pressed and fixed an output negative pole, and a positive electrode presser pressed and fixed an output positive pole. A negative electrode presser, a positive electrode presser, an upper cover and a housing are welded into a whole. In the process of using the product, only the bottom of a housing is put into the water. The water is entered into a cell from air holes. The water is absorbed by an absorbent cotton in an electric core, thus a cell is activated. Therefore, this small metal air cell can be easy to carry, easy to use, and can be well integrated with some existing standard battery products.

### Brief Description of the Drawings

Fig.1 is a schematic view of the whole structure of a small metal air cell according to the present invention.
Fig.2 is an exploded drawing of a small metal air cell according to the present invention.
Fig.3 is a partial section view of a battery cover of a small metal air cell according to the present invention.
Fig.4 is an exploded drawing of an upper cover of a small metal air cell according to the present invention.
Fig.5 is a schematic view of an upper cover of Fig.4, viewed from the other corner.
Fig.6 is a schematic view of an electric core inverted, showing a positive lead end i and a negative lead end j.
Fig.7 is a schematic view of an electric core inverted, showing an insulating colloid.

### Detailed Description of the Preferred Embodiments

The invention improves the product performance of a metal air cell by simple multiplying group of many electric cores, standard and standardized product design, and makes it obtain higher power output and use time. At the same time, standardization design is beneficial to realize product's multiplication and expansion, improve production efficiency and realize mass automation production.

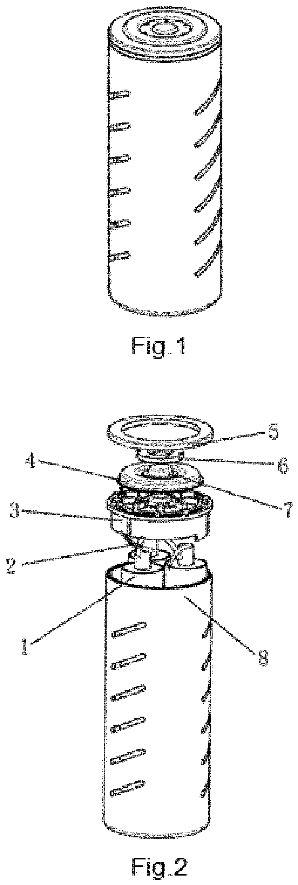

As shown as Fig.1-6, this small metal air cell includes an electric core 1, wires 2, an upper cover 3, an output negative electrode 4, a negative electrode presser 5, a positive pole presser 6, an output positive pole 7, a housing 8.

The cores grouped are placed in a housing, and the bottom of a housing has a ventilation hole a. Each core includes an air electrode b, an absorbent cotton c, an alloy rod d, and an absorbent cotton is encapsulated outside an alloy rod by an air electrode. Each electric core is connected through a wire (the connection may be in series, parallel, or series parallel mixing), and a total positive leading out line and a total negative leading out line are reserved. An output positive pole and an output negative pole are installed on an upper cover. A positive lead end i connecting with an output positive pole and a negative lead end j connecting with an output negative pole are respectively reached in a housing through reserved holes of an upper cover, and respectively connected to a total positive leading out line and a total negative leading out line. A negative electrode presser pressed and fixed an output negative pole, and a positive electrode presser pressed and fixed an output positive pole. A negative electrode presser, a positive electrode presser, an upper cover and a housing are welded into a whole.

There are the following reasons. The cores grouped are placed in a housing, and the bottom of a housing has a ventilation hole. Each core includes a ventilation hole, an absorbent cotton, an alloy rod, and an absorbent cotton is encapsulated outside an alloy rod by an air electrode. Each electric core is connected through a wire (the connection may be in series, parallel, or series parallel mixing), and a total positive leading out line and a total negative leading out line are reserved. An output positive pole and an output negative pole are installed on an upper cover. A positive lead end connecting with an output positive pole and a negative lead end connecting with an output negative pole are respectively reached in a housing through reserved holes of an upper cover, and respectively connected to a total positive leading out line and a total negative leading out line. A negative electrode presser pressed and fixed an output negative pole, and a positive electrode presser pressed and fixed an output positive pole. A negative electrode presser, a positive electrode presser, an upper cover and a housing are welded into a whole. In the process of using the product, only the bottom of a housing is put into the water. The water is entered into a cell from air holes. The water is absorbed by an absorbent cotton in an electric core, thus a cell is activated. Therefore, this small metal air cell can be easy to carry, easy to use, and can be well integrated with some existing standard battery products.

Preferably, as shown as Fig. 1, 2, 3, the said housing is a cylinder, and a split grid is set in a housing, and the number of the said electric core is multiple (may be 2, 3, 4, or more). Each electric core is placed in a grid unit. Specifically, the inner concave part of the cavity of a housing 8 is evenly divided into a plurality of cavities by separated partition, and an electric core 1 is uniformly distributed inside each cavity.

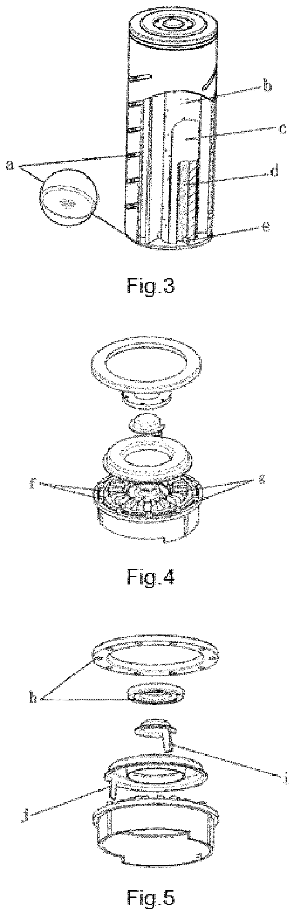

Preferably, as shown as Fig. 3, three small fixed protrusions e are distributed at the bottom of the cavity formed by each grid unit, and the lower end of the said alloy rod is fixed on the small fixed protrusions to realize the locating of the alloy rod in the cavity.

Preferably, the said alloy rod is a magnesium alloy rod. After extensive experiments, the applicant obtained that magnesium is the most suitable material for carrying and using conveniently.

Preferably, as shown as Fig.4, two layers of fixed pins f with annular arrangement are provided on the said upper cover, and fixed pins are meshed with locating holes h on a negative electrode presser and a positive electrode presser. After installing and pressing, a negative electrode presser 5 and a positive electrode presser an upper cover and a housing are welded into a whole. During the installation process, a negative electrode presser 5 and a positive electrode presser 6 press an output negative electrode 4 and an output positive pole 7 to an upper cover 3, and make them fixed by the combination of fixed pins f and locating holes h.

Preferably, as shown as Fig.4, two ring shaped protrusions g for welding are provided at the bottom of fixed pins.

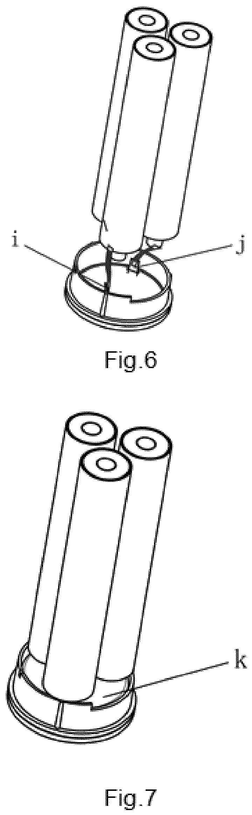

Preferably, as shown as Fig.7, an insulating colloid k is injected into the inner cavity between the top of the said split grid and the top of a housing, so that the insulating colloid covers all line joints and wires between an electric core and an output electrode. This can ensure that a cell can be insulated and sealed at the top, and isolated from water vapor while it is in use.

Preferably, as shown as Fig. 1, 2, 3, ventilation holes a are also provided on the side wall of a housing. This allows the gas generated by the chemical reaction of the electric cores to be released to avoid possible explosions in confined space.

Preferably, as shown as Fig. 1, 2, the ventilation holes on the side wall of a housing are slender shaped holes. By this way, the gas generated by the chemical reaction of the electric cores can be released more quickly, and the internal and external gas circulation can be achieved.

Preferably, by ultrasonic welding, a negative electrode presser, a positive electrode presser, an upper cover and a housing are welded into a whole. Of course, other ways can be used to fix a negative electrode presser, a positive electrode presser, an upper cover and a housing as a whole.

A specific example of the invention is given below.
1. The main structure of a cell is a housing 8, and ventilation holes a are arranged on the side wall and the bottom of a housing 8, and a split grid is arranged inside a housing 8, and the cavity is partitioned into equal parts. The top of a split grid is designed that there is a space reserved from the top of a housing 8. At the bottom of each cavity separated by a split grid, there are three small fixed projections e.
2. An electric core is made up of three parts, namely, an alloy rod d (preferably a magnesium rod), an absorbent cotton c, an air electrode b from outside to inside. An absorbent cotton c is encapsulated outside a magnesium rod d by an air electrode b. Electric cores are evenly arranged in a separated cavity of a cell housing 8. The lower end of a magnesium rod d inside an electric core 1 is fixed on a small fixed protrusion e on the bottom of a housing, so that a magnesium alloy rod can be located inside the cavity.
3. After electric cores 1 are installed into an independent three group, they are connected in series by wires, and a total positive leading out line and a total negative leading out line are reserved.
4. In the process of production, an output negative electrode 4 and an output positive electrode 7 are firstly installed on an upper cover 3, and a positive lead end i and a negative lead end j are reached through the reserved holes on an upper cover 3 to the lower cavity.
5. A negative electrode presser 5, a positive pole presser 6 are respectively installed on an upper cover 3 to press and fix an output negative electrode 4 and an output positive pole 7. Two layers of fixed pins f with annular arrangement are provided on an upper cover 3. During the installation process, fixed pins f are meshed with locating holes h on a negative electrode presser 5 and a positive electrode presser 6. After installing and pressing, a negative electrode presser 5, a positive electrode presser 6, an output negative electrode 4, an output positive pole 7, and an upper cover 3 become a whole module.
6. A total positive leading out line and a total negative leading out line of electric cores grouped are respectively connected with a positive lead end i and a negative lead end j. After connecting, an insulating colloid k is injected into the inner cavity between the top of the said split grid and the top of a housing, so that the insulating colloid covers all line joints and wires between an electric core and an output electrode. The effect of sealing, insulating and isolating water vapor can be achieved. The module after grouped is assembled with a housing 8. In the assembly process, small fixed protrusions e are used to fix the lower end of a magnesium rod d, so that electric cores are placed evenly and accurately inside a housing.
7. After all the assembly is completed, by ultrasonic welding, a negative electrode presser 5, a positive electrode presser 6, an upper cover 3 and a housing 8 are welded into a whole.
8. In the process of using the product, only the bottom of a housing is put into the water. The water is entered into a cell from air holes. The water is absorbed by an absorbent cotton in an electric core, thus a cell is activated. In the process of reactive power generation of a cell, a solidified insulating colloid k inside an upper cover 3 can effectively prevent the water corrosion to wires 2 and the top of electric cores 1, and can also prevent the water from entering the output end of a cell through an upper cover 3, and then corroding an output negative electrode 4 and an output positive pole 7.

The above stated is only preferable embodiments of the present invention, and it should be noted that the above preferable embodiments do not limit the present invention. The claimed scope of the present invention should be based on that defined by the claims. For a skilled person in this technical field, without departing from spirit and scope of the present invention, any improvement and amendment can be made, and these improvement and amendment should belong to the claimed scope of the present invention.

## Claims

1. A small metal air cell includes an electric core (1), wires (2), an upper cover (3), an output negative electrode (4), a negative electrode presser (5), a positive pole press (6), an output positive pole (7), a housing (8).
The cores grouped are placed in a housing, and the bottom of a housing has a ventilation hole (a). Each core includes an air electrode (b), an absorbent cotton (c), an alloy rod (d), and an absorbent cotton is encapsulated outside an alloy rod by an air electrode. Each electric core is connected through a wire (the connection may be in series, parallel, or series parallel mixing), and a total positive leading out line and a total negative leading out line are reserved. An output positive pole and an output negative pole are installed on an upper cover. A positive lead end (i) connecting with an output positive pole and a negative lead end (j) connecting with an output negative pole are respectively reached in a housing through reserved holes of an upper cover, and respectively connected to a total positive leading out line and a total negative leading out line. A negative electrode presser pressed and fixed an output negative pole, and a positive electrode presser pressed and fixed an output positive pole. A negative electrode presser, a positive electrode presser, an upper cover and a housing are welded into a whole.

2. The small metal air cell according to the claim 1, **characterized in that**, the said housing is a cylinder, and a split grid is set in a housing, and the number of the said electric core is multiple. Each electric core is placed in a grid unit.

3. The small metal air cell according to the claim 2, **characterized in that**, three small fixed protrusions (e) are distributed at the bottom of the cavity formed by each grid unit, and the lower end of the said alloy rod is fixed on the small fixed protrusions to realize the locating of the alloy rod in the cavity.

4. The small metal air cell according to any one of the claim 1-3, **characterized in that**, the said alloy rod is a magnesium alloy rod.

5. The small metal air cell according to the claim 4, **characterized in that**, two layers of fixed pins (f) with annular arrangement are provided on the said upper cover, and fixed pins are meshed with locating holes (h) on a negative electrode presser and a positive electrode presser. After installing and pressing, a negative electrode presser, a positive electrode presser, an upper cover and a housing are welded into a whole.

6. The small metal air cell according to the claim 5, **characterized in that**, two ring shaped protrusions (g) for welding are provided at the bottom of fixed pins.

7. The small metal air cell according to the claim 4, **characterized in that**, an insulating colloid (k) is injected into the inner cavity between the top of the said split grid and the top of a housing, so that the insulating colloid covers all line joints and wires between an electric core and an output electrode.

8. The small metal air cell according to the claim 1, **characterized in that**, ventilation holes (a) are also provided on the side wall of a housing.

9. The small metal air cell according to the claim 8, **characterized in that**, the ventilation holes on the side wall of a housing are slender shaped holes.

10. The small metal air cell according to the claim 1, **characterized in that**, by ultrasonic welding, a negative electrode presser, a positive electrode presser, an upper cover and a housing are welded into a whole.
